Europäisches Patentamt

European Patent Office

Office européen des brevets

(11) Veröffentlichungsnummer: **0 265 714 B1**

(12) **EUROPÄISCHE PATENTSCHRIFT**

(45) Veröffentlichungstag der Patentschrift:
05.12.90

(51) Int. Cl.⁵: **F16C 19/20**

(21) Anmeldenummer: 87114460.6

(22) Anmeldetag: 03.10.87

(54) Elastisches Distanzstück für Kugellager.

(30) Priorität: 21.10.86 DE 3635725

(43) Veröffentlichungstag der Anmeldung:
04.05.88 Patentblatt 88/18

(45) Bekanntmachung des Hinweises auf die Patenterteilung:
05.12.90 Patentblatt 90/49

(84) Benannte Vertragsstaaten:
DE FR GB IT

(56) Entgegenhaltungen:
FR-A- 1 332 286
FR-A- 2 343 922
US-A- 2 893 792

(73) Patentinhaber: INA Wälzlager Schaeffler KG,
Industriestrasse 1-3 Postfach 1220,
D-8522 Herzogenaurach(DE)

(72) Erfinder: Frank, Hubertus, Dipl.-Ing. (FH), Troppauer
Strasse 8, D-8552 Höchstadt(DE)
Erfinder: Nagengast, Andreas, Dipl.-Ing. (FH),
Kirchstrasse 5, D-8557 Eggolsheim(DE)

(74) Vertreter: Klug, Horst, Dipl.-Ing. (FH), c/o INA Wälzlager
Schaeffler KG Postfach 12 20,
D-8522 Herzogenaurach(DE)

## Beschreibung

Die Erfindung betrifft ein elastisches Distanzstück, das zwischen aufeinanderfolgende Kugeln eines Kugellagers eingesetzt ist und das an seinen den Kugeln zugekehrten Flächen Ausnehmungen aufweist, in welche die Kugeln teilweise eingreifen, wobei das Distanzstück eine einem Zylinder einbeschreibbare Außenkontur besitzt und seine Länge mindestens dem halben Kugeldurchmesser entspricht.

Derartige Distanzstücke verhindern einerseits, daß sich aufeinanderfolgende Kugeln gegenseitig berühren, wobei jedoch darauf zu achten ist, daß sich durch die Distanzstücke der Drehwiderstand nicht erhöht. Andererseits muß das Distanzstück so dimensioniert sein, daß der Abstand zweier aufeinanderfolgender Kugeln möglichst klein ist, um eine hohe Tragfähigkeit des Kugellagers zu erzielen. Trotzdem muß das Distanzstück eine ausreichende Länge aufweisen, damit ein Umkippen auch bei maximalem Spiel zwischen zwei aufeinanderfolgende Kugeln ausgeschlossen ist.

Distanzstücke dieser Art sind in den verschiedensten Ausführungsformen bekannt. Dabei sind die den Kugeln zugewandten Ausnehmungen im wesentlichen der Kugelform angepaßt, um dadurch eine Führung der Kugeln zu erzielen. Dies hat jedoch den Nachteil, daß bei exzentrischer Belastung des Lagers Axialkräfte auf das Distanzstück wirken, die zu einer Umschließung der Kugel führen, was einen unerwünschten rapiden Drehwiderstandsanstieg zur Folge hat.

Zusätzlich wird bei der Umschließung der Kugel der Schmierfilm abgerissen, wodurch das Distanzstück einer weiteren Lasterhöhung unterworfen wird, was letztlich zu seiner Zerstörung und damit zum Ausfall des Lagers führen kann.

Wesentlich trägt hierzu bei den bekannten Distanzstücken auch der ungünstige Kraftfluß bei, der sich durch die zu steife Ausführung der Distanzstücke in verschiedenen Bereichen ergibt (US-A 2 893 792).

Eine andere Ausführungsform sieht vor, daß die Distanzstücke eine etwa zylinderförmige Außenkontur aufweisen und ihre Länge etwa einem halben Kugeldurchmesser entspricht, womit die Gefahr des Umkippens weitgehend beseitigt ist. Allerdings sind auch bei dieser Ausführung die Ausnehmungen der Kugelkontur angepaßt, was mit bereits besagten Nachteilen verbunden sein kann (FR-A 2 343 922).

Der Erfindung liegt die Aufgabe zugrunde, ein derartiges Distanzstück in einfacher Weise so auszubilden, daß der Drehwiderstand auch bei exzentrischer Belastung nicht in bisher üblichem Maß ansteigt und eine einwandfreie Schmierung sichergestellt ist, so daß ein vorzeitiger Laufbahnverschleiß vermieden wird.

Erfindungsgemäß wird diese Aufgabe dadurch gelöst, daß das Distanzstück eine einem Zylinder einbeschreibbare Außenkontur besitzt und seine Länge mindestens dem halben Kugeldurchmesser entspricht, und daß es in seiner Bohrung eine kegelförmige Zwischenwand besitzt, die wenigstens in ihrem mittleren, an die Kegelspitze anschließenden Bereich durch annähernd radial verlaufende Schlitze in elastisch federnde Zungen unterteilt ist, wobei die eine Kugel annähernd punktförmig im Zentrum und die andere Kugel in einem Berührkreis an der Zwischenwand anläuft. Durch die vorgeschlagene Ausbildung ergibt sich der Vorteil, daß eine Umschließung der Kugel nicht mehr möglich ist. Dadurch wird einerseits der Drehwiderstandsanstieg auch bei exzentrischer Belastung stark abgeschwächt und auch ein Abreißen des Schmierfilmes verhindert. Andererseits wird durch die Schlitze in der Mitte des Distanzstückes eine federnde Wirkung erzielt, so daß das Distanzstück an vordefinierter Stelle unter Last einfedert und diese abbaut, so daß ein Gleiten der Kugeln auf der Laufbahn und damit ein vorzeitiger Verschleiß verhindert wird.

Ein weiterer Vorteil der Formgebung wird auch darin gesehen, daß im Distanzstück ein Schmiermittelvorratsraum vorhanden ist, der bis zu einem gewissen Grad Schmiermittelverunreinigungen aufnehmen kann, so daß Schäden durch Verunreinigungen vermieden werden. Außerdem ist durch die Länge des Distanzstückes eine zuverlässige Führung möglich, so daß ein Umkippen des Distanzstückes auch bei maximalem Spiel zwischen zwei aufeinanderfolgende Kugeln verhindert wird.

Ein Ausführungsbeispiel der Erfindung ist in der Zeichnung dargestellt und wir nachfolgend näher beschrieben. Es zeigen:

Fig 1 ein erfindungsgemäßes Distanzstück im Längsschnitt und
Fig. 2 eine Ansicht in Richtung des Pfeiles A nach Fig. 1.

Das Distanzstück 1 ist zwischen zwei aufeinanderfolgende Kugeln 2 eines nicht näher dargestellten Kugellagers eingesetzt und weist eine einem Zylinder einbeschreibbare Außenkontur 3 auf, wobei seine Länge L mindestens dem halben Kugeldurchmesser entspricht. In seiner Bohrung weist das Distanzstück 1 einer kegelförmige Zwischenwand 4 auf, die wenigstens in ihrem mittleren, und die Kegelspitze 5 anschließenden Bereich durch annähernd radial verlaufende Schlitze 6 in elastisch federnde Zungen 7 unterteilt ist.

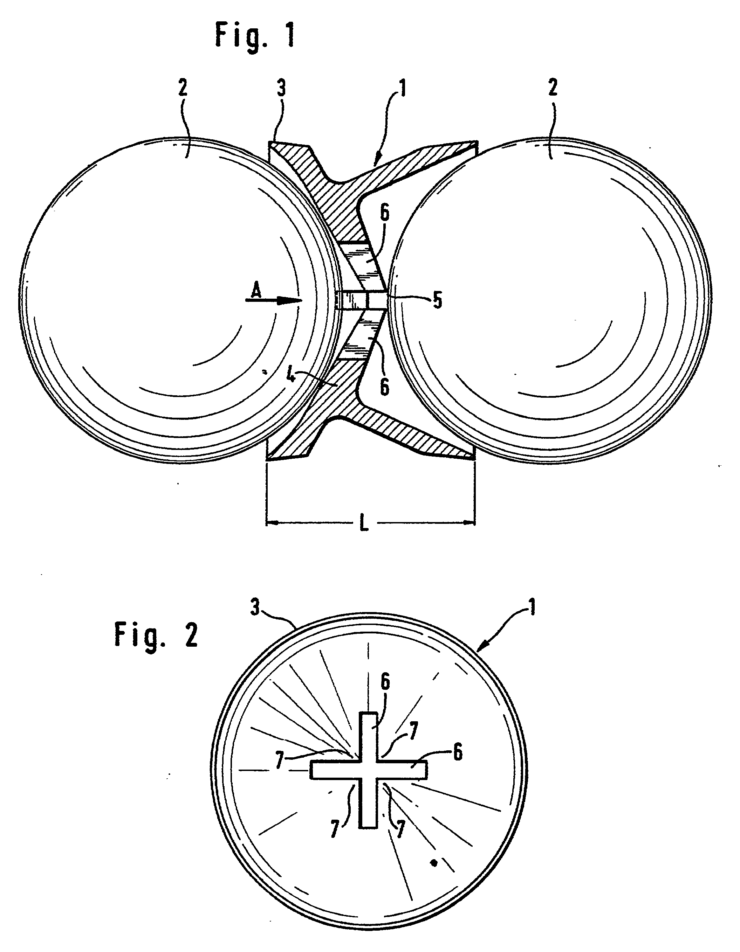

Wie Fig. 1 zeigt, läuft die eine Kugel 2 punktförmig im Zentrum an der Kegelspitze 5 und die andere Kugel 2 in einen Berührkreis an der Zwischenwand 4 an.

## Patentansprüche

Elastisches Distanzstück (1) das zwischen aufeinanderfolgende Kugeln (2) eines Kugellagers eingesetzt ist und das an seinen den Kugeln zugekehrten Flächen Ausnehmungen aufweist, in welche die Kugeln teilweise eingreifen, wobei das Distanzstück (1) eine einem Zylinder einbeschreibbare Außenkontur (3) besitzt und seine Länge (L) mindestens dem halben Kugeldurchmesser entspricht, dadurch gekennzeichnet, daß das Distanzstück (1) in seiner Bohrung eine kegelförmige Zwischenwand (4) besitzt, die wenigstens in ihrem mittleren, an die Kegelspitze (5) anschließenden Bereich durch annähernd radial verlaufende Schlitze (6) in elastisch federnde Zungen (7) unterteilt ist, wobei die eine Kugel (2) annähernd punktförmig im Zentrum und die andere Kugel (2) in einem Berührkreis an der Zwischenwand (4) anläuft.

## Claims

Elastic spacer (1) which is inserted between consecutive balls (2) of a ball bearing and which, on its surfaces facing the balls comprises recesses into which the balls engage partially, the spacer (1) having an outer contour (3) which can be inscribed in a cylinder and a length (L) which corresponds to at least half the ball diameter, characterized in that the spacer (1) is provided in its bore with a cone-shaped intermediate wall (4) which, at least in its central region adjacent to the cone tip (5) is divided into resilient tongues (7) by approximately radially extending slots (6), wherein the one ball (2) abuts approximately pointwise at the centre and the other ball (2) in a contact circle against the intermediate wall (4).

## Revendications

Entretoise élastique (1) qui est insérée entre des billes (2) successives d'un roulement à billes et qui, sur ses surfaces en regard des billes, comprend des évidements dans lesquels les billes s'engagent en partie, l'entretoise (1) ayant un contour externe (3) inscriptible dans un cylindre et une longueur (L) correspondant au moins au demi-diamètre des billes, caractérisée en ce que l'entretoise (1) comporte dans son alésage, une paroi intermédiaire conique (4) qui, au moins dans sa région centrale se raccordant à la pointe (5) du cône, est divisée en languettes élastiques (7) par des lumières (6) qui s'étendent à peu près radialement, l'une bille (2) butant à peu près ponctuellement au centre et l'autre bille (2) par un cercle de contact contre la paroi intermédiaire (4).

# Fig. 1

# Fig. 2